# EUROPEAN PATENT SPECIFICATION

(11) **EP 3 862 590 B1**
(45) Date of publication and mention of the grant of the patent: **08.05.2024**
(21) Application number: 19868445.8
(22) Date of filing: 25.09.2019
(51) Int. Cl.: B60T 13/74, F16B 21/18, F16D 65/22, F16D 121/24, F16D 125/62, F16D 51/22, F16D 125/40

(54) **ELECTRIC PARKING BRAKE DEVICE**
ELEKTRISCHE FESTSTELLBREMSENVORRICHTUNG
DISPOSITIF DE FREIN DE STATIONNEMENT ÉLECTRIQUE

(30) Priority: 02.10.2018 JP 2018187233
(43) Date of publication of application: 11.08.2021
(73) Proprietor: Hitachi Astemo, Ltd., Hitachinaka-shi, Ibaraki 312-8503 (JP)
(72) Inventor: USUI, Koji, Hitachinaka-shi, Ibaraki 312-8503 (JP)
(74) Representative: Dehns
(86) International application number: PCT/JP2019/037607
(87) International publication number: WO 2020/071211

(56) References cited:
- WO-A1-2006/050770
- DE-A1-102017 214 938
- JP-A- 2008 279 827
- JP-A- 2008 279 827
- JP-A- 2011 179 686

## Description

### Technical Field

The present invention relates to an electric parking brake device including a parking brake lever capable of generating a parking brake force according to an operation, a brake cable including, at one end thereof, an engagement piece to be engaged with the parking brake lever, and an electric actuator including a drive shaft to be connected, at one end thereof, to the other end of the brake cable and enabling the drive shaft to move reciprocally in an axial direction.

### Background Art

JP 2008 279827 A discloses an electric parking brake in which operation of a screw shaft of a cable driving device is transmitted to a brake cable. WO 2006/050770 A1 and DE 102017214938 A1 also disclose connections between components in electric parking brakes.

An electric parking brake device configured to gain a parking brake force by pulling a brake cable by an electric actuator and rotationally driving a parking brake lever is known by JP-A-2016-222159.

### Summary of Invention

### Technical Problem

The device disclosed in JP-A-2016-222159 described above is not excellent in terms of assimilability because the brake cable is coupled to a screw shaft member, which is a drive shaft provided in the electric actuator, by caulking coupling, and thus a coupling work between the screw shaft member and the brake cable is cumbersome.

In view of such circumstances, it is an object of the present invention to provide an electric parking brake device with improved assemblability by facilitating a coupling work between a drive shaft of an electric actuator and a brake cable. Solution to Problem

In order to achieve the above-described object, the present invention provides an electric parking brake device including: a parking brake lever capable of generating a parking brake force according to an operation; a brake cable including, at one end thereof, an engagement piece to be engaged with the parking brake lever; and an electric actuator including a drive shaft coupled, at one end thereof, to other end of the brake cable and enabling the drive shaft to move reciprocally in an axial direction, the electric parking brake device has a first characteristic in that an insertion hole is provided on one of a joint and the drive shaft, the joint being secured to the other end of the brake cable, and an insertion shaft part to be inserted into the insertion hole is provided coaxially on the other of the joint and the drive shaft, the electric parking brake device characterized in that an annular engaging member that can be inserted into the insertion hole together with the insertion shaft part is interposed between an inner periphery of the insertion hole and an outer periphery of the insertion shaft part so as to couple the joint and the drive shaft.

In addition to the configuration of the first characteristic, certain embodiments have a second characteristic in that the insertion hole is formed to have a diameter smaller than an outer diameter of the engaging member when the engaging member repulsively expandable and contractible by an action of an external force is in a natural state, a tapered hole formed to have a diameter increasing as it goes outward in the axial direction and coaxially continuing from one end of the insertion hole is provided on one of the joint and the drive shaft, a first annular recess is formed on the outer periphery of the insertion shaft part, the first annular recess is capable of temporality securing the engaging member in the natural state and allows the engaging member in the temporarily secured state to be contracted in diameter until insertion of the engaging member into the insertion hole is enabled, and a second annular recess configured to rotatably engage an outer peripheral side of the engaging member in an expanded state is formed in the insertion hole.

In addition to the configuration of the second characteristic, certain embodiments have a third characteristic in that the insertion shaft part includes, on the outer periphery thereof, a third annular recess continuing from the first annular recess on a front side of the first annular recess along an insertion direction of the insertion shaft part into the insertion hole and formed to be shallower than the first annular recess while being capable of receiving an inner peripheral side of the engaging member.

In addition to the configuration of the first characteristic, certain embodiments have a fourth characteristic in that the insertion shaft part includes, on the outer periphery thereof, a fourth annular recess including: a small diameter shaft section capable of temporarily securing the engaging member expandable and contractible by an action of an external force in a state of having a maximum outer diameter smaller than an inner diameter of the insertion hole and enabling displacement in a direction orthogonal to a center axis of the insertion shaft part, a first tapered portion having a small diameter end coaxially continuing from a front end of the small diameter shaft section along the insertion direction of the insertion shaft part into the insertion hole, a large diameter shaft section coaxially continuing from a large diameter end of the first tapered portion, and a second tapered portion having a small diameter end coaxially continuing from a front end of the large diameter shaft section along the insertion direction, and the insertion hole includes, on an inner periphery thereof, an annular locking recess, which allows engagement of part of the outer periphery of the engaging member according to the displacement of the engaging member in a state of being temporality secured to the small diameter shaft section in the direction orthogonal to the center axis of the insertion shaft part and allows engagement of the entire outer periphery of the engaging member in a state of being fitted to the large diameter shaft section.

In addition to the configuration of the first characteristic, certain embodiments have a fifth characteristic in that the insertion shaft part includes, on the outer periphery thereof, a fourth annular recess having a small diameter shaft section capable of temporarily securing the engaging member repulsively expandable and contractible by an action of an external force in a state of having the maximum outer diameter larger than the inner diameter of the insertion hole in the natural state and capable of being contracted in diameter when being inserted into the insertion hole, a first tapered portion having a small diameter end coaxially continuing from a front end of the small diameter shaft section along the insertion direction of the insertion shaft part into the insertion hole, a large diameter shaft section coaxially continuing from a large diameter end of the first tapered portion, and a second tapered portion having a small diameter end coaxially continuing from a front end of the large diameter shaft section along the insertion direction, and the insertion hole includes, on the inner periphery thereof, an annular locking recess, which allows engagement of part of the outer periphery of the engaging member according to restoration of the engaging member in a state of being temporarily secured to the small diameter shaft section from a state of being contracted in diameter to the natural state and allows engagement of the entire outer periphery of the engaging member in a state of being fitted to the large diameter shaft section.

In addition to configurations in any one of the first to the fifth characteristics, certain embodiments have the sixth characteristic in that the engaging member is a C-ring.

In addition to the configuration of the fourth or the fifth characteristic, certain embodiments have a seventh characteristic in that a regulating member interposed between a rear end wall and the joint along the insertion direction of the fourth annular recess is fitted to the small diameter shaft section in a state in which the engaging member fitted to the large diameter shaft section is engaged with the locking recess.

In addition to the configuration of the fourth characteristic, certain embodiments include an eighth characteristic in that the engaging member includes, on the inner periphery or the outer periphery thereof, a plurality of grooves at regular intervals in a circumferential direction.

In addition to configuration of the seventh characteristic, certain embodiments have a ninth characteristic in that the regulating member is an E-type retaining ring.

### Advantageous Effect of the Invention

According to the first characteristic of the present invention, by inserting the insertion shaft part provided coaxially on the other one of the joint and the drive shaft together with the annular engaging member into the insertion hole provided on one of the joint secured to the brake cable and the drive shaft, the engaging member is interposed between the inner periphery of the insertion hole and the outer periphery of the insertion shaft part and thus the joint and the drive shaft are coupled, whereby a coupling work between the drive shaft of the electric actuator and the brake cable is facilitated for ease of assembly.

Also, according to the second characteristic of the present invention, the tapered hole coaxially continues to one end of the insertion hole, which is smaller in diameter than the outer diameter of the engaging member in the natural state, and the insertion shaft part includes, on the outer periphery thereof, the first annular recess capable of temporarily securing the engaging member in the natural state and allows the engaging member in the temporarily secured state to be contracted in diameter until insertion of the engaging member into the insertion hole is enabled, and the second annular recess which rotatably engages the outer peripheral side of the engaging member in an expanded state is formed in the insertion hole. Therefore, when the insertion shaft part having the engaging member temporarily secured to the first annular recess is inserted into the insertion hole, the outer peripheral side of the engaging member contracted in diameter by an abutment with the tapered hole engages the second annular recess, so that the engaging member is engaged with both of the outer periphery of the insertion shaft part and the inner periphery of the insertion hole. Accordingly, the rotation of the engaging member in the second annular recess is allowed, and thus the brake cable can be rotatably coupled to the drive shaft with a simple operation such as inserting the insertion shaft part having the engaging member temporarily secured into the insertion hole, so that the brake cable is free from twisting even when an engagement position of the engagement piece at the one end of the brake cable with the parking brake lever is constant.

Also, according to the third characteristic of the present invention, the third annular recess shallower than the first annular recess is formed on the outer periphery of the insertion shaft part continuously from the first annular recess on the front side of the first annular recess along the insertion direction of the insertion shaft part into the insertion hole, and the third annular recess can receive the inner peripheral side of the engaging member. Therefore, even when the expanding force of the engaging member is lowered, such an event that the entire engaging member is accommodated in the first annular recess and hence is decoupled from the second annular recess is prevented from occurring, so that the engaging member is inhibited from coming off.

Also, according to the fourth characteristic of the present invention, the fourth annular recess formed on the outer periphery of the insertion shaft part includes: the small diameter shaft section capable of temporarily securing the engaging member in the state of enabling displacement in the direction orthogonal to the center axis of the insertion shaft part while having the maximum outer diameter smaller than the inner diameter of the insertion hole; the first tapered portion having the small diameter end coaxially continuing from the front end of the small diameter shaft section along the insertion direction of the insertion shaft part into the insertion hole, the large diameter shaft section coaxially continuing from the large diameter end of the first tapered portion, and the second tapered portion having the small diameter end coaxially continuing from the front end of the large diameter shaft section along the insertion direction, and the annular locking recess formed on the inner periphery of the insertion hole allows engagement of part of the outer periphery of the engaging member according to the displacement of the engaging member temporarily secured to the small diameter shaft section in the direction orthogonal to the center axis of the insertion shaft part. When the insertion shaft part is inserted into the insertion hole in the horizontal direction in a state in which the engaging member is temporarily secured to the small diameter shaft section of the fourth annular recess, the engaging member drops in the direction orthogonal to the center axis of the insertion shaft part under it's own weight when the engaging member reaches the position corresponding to the locking recess. Accordingly, part of the outer periphery of the engaging member engages the locking recess. When the insertion shaft part is retracted in this state, the engaging member restricted from retraction movement by the engagement with the locking recess is expanded in diameter by the abutment with the first tapered portion and is fitted to the large diameter shaft section. In this state, the engaging member engaged with the locking recess is inhibited from being contracted in diameter, the engaging member engages with both of the outer periphery of the insertion shaft part and the inner periphery of the insertion hole, whereby the engaging member is allowed to rotate in the annular locking recess. Accordingly, the brake cable can be rotatably coupled to the drive shaft with a simple operation such as inserting the insertion shaft part having the engaging member temporarily secured into the insertion hole and then retracting the same, so that the brake cable is free from twisting even when an engagement position of the engagement piece at the one end of the brake cable with the parking brake lever is constant.

Also, according to the fifth characteristic of the present invention, the fourth annular recess formed on the outer periphery of the insertion shaft part includes: the small diameter shaft section capable of temporarily securing the engaging member in the state of contractible in diameter; the first tapered portion having the small diameter end coaxially continuing from the front end of the small diameter shaft section along the insertion direction of the insertion shaft part into the insertion hole, a large diameter shaft section coaxially continuing from the large diameter end of the first tapered portion, and the second tapered portion having the small diameter end coaxially continuing from the front end of the large diameter shaft section along the insertion direction, and the annular locking recess formed on the inner periphery of the insertion hole having a diameter larger than the maximum outer diameter of the engaging member temporarily secured to the small diameter shaft section and in the natural state allows engagement of at least part of the outer periphery of the engaging member by the restoration of the engaging member in a state of being contracted in diameter by being inserted into the insertion hole to the natural state. Therefore, when the insertion shaft part is inserted into the insertion hole while contracting the diameter of the engaging member temporarily secured to the small diameter shaft section of the fourth annular recess so as to come into sliding contact with the inner periphery of the insertion hole, the outer periphery of the engaging member engages the locking recess when the engaging member reaches a position corresponding to the locking recess. When the insertion shaft part is retracted in this state, the engaging member restricted from retraction movement by the engagement with the locking recess is expanded in diameter by the abutment with the first tapered portion and is fitted to the large diameter shaft section. In this state, the engaging member engaged with the locking recess is inhibited from being contracted in diameter, the engaging member engages with both of the outer periphery of the insertion shaft part and the inner periphery of the insertion hole, whereby the engaging member is allowed to rotate in the annular locking recess. Accordingly, the brake cable can be rotatably coupled to the drive shaft with a simple operation such as inserting the insertion shaft part having the engaging member temporarily secured into the insertion hole and then retracting the same, so that the brake cable is free from twisting even when an engagement position of the engagement piece at the one end of the brake cable with the parking brake lever is constant.

According to the sixth characteristic of the present invention, the cost reduction is achieved by employing an inexpensive C-ring for the engaging member.

According to the seventh characteristic of the present invention, the regulating member is fitted to the small diameter shaft section of the fourth annular recess in a state in which the engaging member fitted to the large diameter shaft section of the fourth annular recess is engaged with the locking recess, and the regulating member is interposed between the rear end wall and the joint along the insertion direction of the fourth annular recess. Therefore, the insertion shaft part is prevented from unintentionally enters the insertion hole in a state in which the insertion shaft part and the joint are coupled via the engaging member, and the engaging member can be prevented from becoming a state of being fitted to the small diameter shaft section.

According to the eighth characteristic of the present invention, by the plurality of grooves formed on the inner periphery or the outer periphery of the engaging member, expansion and contraction of the engaging member are facilitated.

Furthermore, according to the ninth characteristic of the present invention, the cost reduction is achieved by employing an inexpensive E-type retaining ring for the regulating member.

### Brief Description of Drawings

[Fig. 1] Fig. 1 is a front view of a drum brake apparatus of a first embodiment (first embodiment).
[Fig. 2] Fig. 2 is a cross-sectional view taken along a line 2-2 in Fig. 1 (first embodiment).
[Fig. 3] Fig. 3 is a perspective view of an electric actuator (first embodiment).
[Fig. 4] Fig. 4 is a side view illustrating an end of a screw shaft and a joint in a separated state (first embodiment).
[Fig. 5] Fig. 5 is a cross-sectional view illustrating steps of coupling the end of the screw shaft and the joint in sequence (first embodiment).
[Fig. 6] Fig. 6 illustrates a second embodiment and is a perspective view illustrating steps of coupling an end of a screw shaft and a joint in sequence (second embodiment).
[Fig. 7] Fig. 7 is a cross-sectional view illustrating a state in which the end of the screw shaft of an engaging member in a temporarily secured state is inserted into the joint (second embodiment).
[Fig. 8] Fig. 8 is a cross-sectional view illustrating steps of coupling the end of the screw shaft and the joint in sequence (second embodiment).
[Fig. 9] Fig. 9 illustrates a third embodiment and is a cross-sectional view illustrating steps of coupling an end of a screw shaft and a joint in sequence (third embodiment). Reference Signs List

34: parking brake lever
36: engagement piece
37: brake cable
38: electric actuator
39, 59: screw shaft as a drive shaft
39a, 59a: insertion shaft part
48, 58 joint
49, 60, 70: engaging member
50, 64: insertion hole
51: tapered hole
53: first annular recess
54: second annular recess
55: third annular recess
65: fourth annular recess
65a: small diameter shaft section
65b: first tapered portion
65c: large diameter shaft section
65d: second tapered portion
65e: rear end wall
67: locking recess
Dd: maximum outer diameter
De: inner diameter of insertion hole

### Description of Embodiments

Referring to the attached drawings as needed, embodiments of the present invention will be described.

### First Embodiment

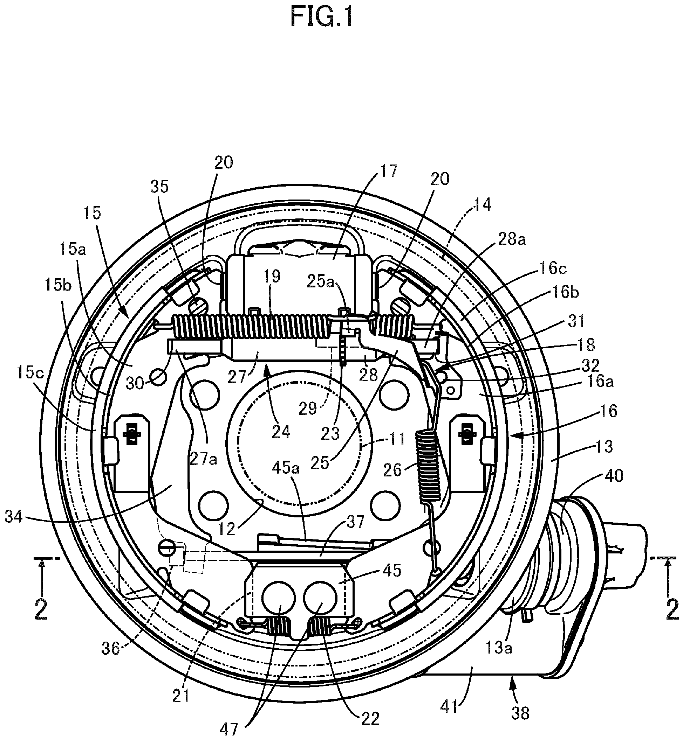

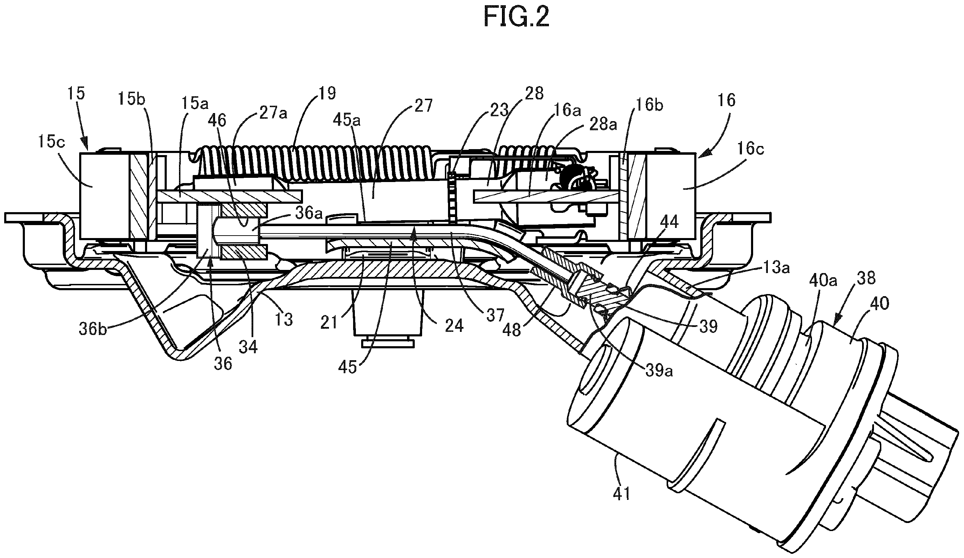

Referring now to Fig. 1 to Fig. 5, a first embodiment of the present invention will be described. Referring first to Fig. 1 to Fig. 3, a drum brake is provided on, for example, a left rear wheel of a four-wheeled vehicle, the drum brake includes: a secured back plate 13 having a through hole 12 for allowing passage of an axle 11 of the left rear wheel at a center thereof, first and second brake shoes 15, 16 disposed in the back plate 13 to allow sliding contact with an inner periphery of a brake drum 14 rotating together with the left rear wheel, a wheel cylinder 17 secured to the back plate 13 to cause the first and second brake shoes 15, 16 to exert a force for expanding operation, automatic braking gap adjusting means (so-called an auto-adjuster) 18 configured to automatically adjust a gap between the first and second brake shoes 15, 16 and the brake drum 14, and a return spring 19 provided between the first and second brake shoes 15, 16.

The first and second brake shoes 15, 16 include first and second webs 15a, 16a formed into arched flat plates along the inner periphery of the brake drum 14, first and second rims 15b, 16b provided continuously from and orthogonally to outer peripheries of the first and second webs 15a, 16a, and first and second linings 15c, 16c adhered to outer peripheries of the first and second rims 15b, 16b.

An anchor block 21, which serves as a fulcrum when the first and second brake shoes 15, 16 expand and contract, is secured to the back plate 13 so as to rotatably support ends of the first and second webs 15a, 16a on one side (lower ends in this embodiment). The wheel cylinder 17 is secured to the back plate 13 between the other side of the first brake shoe 15 and the other side of the second brake shoe 16 so as to be actuated by an output hydraulic pressure of a master cylinder (not illustrated) operated by a brake pedal and to exert a force to drive the first and second brake shoes 15, 16 to an expanding side with the anchor block 21 as a fulcrum. Outer ends of a pair of pistons 20 provided on the wheel cylinder 17 are disposed so as to face ends of the first and second webs 15a, 16a on the other side (upper ends in this embodiment).

A coil spring 22 is provided between the lower ends of the first and second webs 15a, 16a to urge the lower ends of the first and second webs 15a, 16a toward the anchor block 21, and a pair of the return springs 19 are provided between the upper ends of the first and second webs 15a, 16a to urge the first and second brake shoes 15, 16 in a contracting direction.

The automatic braking gap adjusting means 18 includes a contracting position regulating strut 24 which is provided between the first and second webs 15a, 16a provided on the first and second brake shoes 15, 16 and may be expanded by rotation of an adjust gear 23, an adjust lever 25 having a feed pawl 25a configured to engage the adjust gear 23 and rotatably supported by the second web 16a of the second brake shoe 16 of the first and second brake shoes 15, 16, and an adjust spring 26 configured to rotate and urge the adjust lever 25 to a side rotating the adjust gear 23 in a direction of extending the contracting position regulating strut 24.

The contracting position regulating strut 24 is configured to regulate a contracted position of the first and second brake shoes 15, 16, and includes a first rod 27 having a first engagement coupling portion 27a configured to engage the first web 15a, near the upper end thereof, provided on the first brake shoe 15 of the first and second brake shoes 15, 16, a second rod 28 having a second engagement coupling portion 28a configured to engage the second web 16a, near the upper end thereof, provided on the second brake shoe 16 and disposed coaxially with the first rod 27, and an adjust bolt 29 inserted at one end thereof into the first rod 27 to allow relative movement in an axial direction and screwed at the other end thereof coaxially into the second rod 28. The adjust gear 23 is disposed between the first and second rods 27, 28 and formed on an outer periphery of the adjust bolt 29.

A first locking recess 30 to bring the first engagement coupling portion 27a into engagement is provided on a side edge of the first web 15a, near the upper end thereof, facing the axle 11, while a second locking recess 31 to bring the second engagement coupling portion 28a into engagement is provided on a side edge of the second web 16a, near the upper end thereof, facing the axle 11.

The adjust lever 25 having the feed pawl 25a to be engaged with the adjust gear 23 is rotatably supported via a support shaft 32 by the second web 16a, and the adjust spring 26 is provided between the second web 16a and the adjust lever 25. Moreover, a spring force of the adjust spring 26 is set to be less than a spring force of the return spring 19.

According to the automatic braking gap adjusting means 18, when the first and second brake shoes 15, 16 are expanded by a certain value or more due to wear of the first and second linings 15c, 16c when being brought into the expanding operation by an operation of the wheel cylinder 17, the adjust lever 25 is rotated about an axis of the support shaft 32 by a spring force of the adjust spring 26, thereby rotating the adjust gear 23, and in response thereto, correcting an effective length of the contracting position regulating strut 24 to be longer.

The drum brake is provided with a parking brake lever 34 which may generate a parking brake force in response to the operation. The parking brake lever 34 is disposed so as to overlap with a portion of the first web 15a of the first brake shoe 15 in front view (a direction indicated in Fig. 1) in a direction along a rotation axis of the brake drum 14, and extends along a longitudinal direction of the first web 15a.

An engagement piece 36 secured to one end of a brake cable 37 by, for example, caulking coupling, is engaged with one end (lower end in this embodiment) of the parking brake lever 34, and the other end (upper end in this embodiment) of the parking brake lever 34 is coupled to the upper end of the first web 15a of the first brake shoe 15 via a pin 35.

When the parking brake of a vehicle is operated, the parking brake lever 34 is rotated and driven counterclockwise in Fig. 1 with the pin 35 as a fulcrum by a pulling force input from the brake cable 37. The rotation of the parking brake lever 34 causes a force of bringing the second lining 16c provided on the second brake shoe 16 into press contact with the inner periphery of the brake drum 14 to act on the second brake shoe 16 via the contracting position regulating strut 24. Furthermore, when the parking brake lever 34 is rotated and driven continuously counterclockwise in Fig. 1, the parking brake lever 34 rotates with an engaging portion between the contracting position regulating strut 24 and the first engagement coupling portion 27a as a fulcrum, and the first brake shoe 15, in turn, is brought into the expanding operation via the pin 35, which brings the first lining 15c of the first brake shoe 15 into press contact with the inner periphery of the brake drum 14. In other words, the parking brake lever 34 is operated to an operating position in which the first and second linings 15c, 16c of the first and second brake shoes 15, 16 are in press contact with the inner periphery of the brake drum 14, and in this state, a state in which the parking brake is applied is achieved.

When application of the rotational driving force to the parking brake lever 34 is stopped by loosening the brake cable 37, the parking brake lever 34 is returned to a non-operating position together with the first and second brake shoes 15, 16 operated by a spring force of the return spring 19 in a direction away from the inner periphery of the brake drum 14.

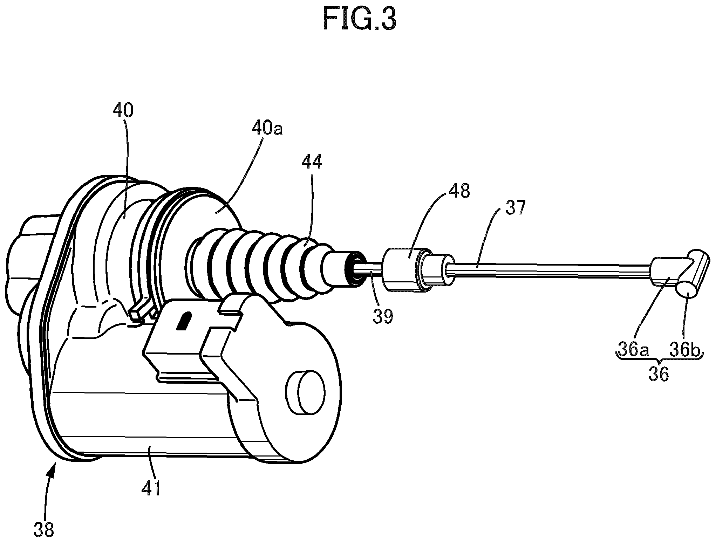

Referring also to Fig. 3, the brake cable 37 is configured to be pulled by a motive force exerted by an electric actuator 38, and the electric actuator 38 includes a screw shaft 39 as a drive shaft coupled to the brake cable 37, an actuator case 40 configured to support the screw shaft 39 so as to allow reciprocating motion in the axial direction while inhibiting the rotation thereof, an electric motor 41 supported by the actuator case 40 so as to be freely rotatable in forward and reverse directions, and a motion conversion mechanism (not illustrated) interposed between the electric motor 41 and the screw shaft 39 and housed in the actuator case 40 while enabling conversion of the rotational motion generated by the electric motor 41 into the linear motion of the screw shaft 39.

The back plate 13 is provided with a mounting cylinder portion 13a protruding therefrom, and a cylinder portion 40a provided on the actuator case 40 of the electric actuator 38 is fitted and secured to the mounting cylinder portion 13a. In addition, a boot 44 is provided between a portion of the screw shaft 39 protruding from the cylinder portion 40a and the insertion shaft part 39a so as to cover the portion of the screw shaft 39 protruding from the cylinder portion 40a.

The engagement piece 36 secured to one end of the brake cable 37 is configured to be engaged with the lower end of the parking brake lever 34 while keeping the position with respect to the parking brake lever 34 constant. In this embodiment, the engagement piece 36 integrally includes a shaft portion 36a to be inserted into a groove 46 formed at the lower end of the parking brake lever 34 and an engaging portion 36b continuing from the shaft portion 36a at a right angle so as to engage the lower end of the parking brake lever 34 from the opposite side of the brake cable 37 to form a substantially T-shape.

Between the one ends of the first and second webs 15a, 16a, a holding plate 45 which sandwiches the anchor block 21 with the back plate 13 is mounted to a lower portion of the back plate 13 with a pair of rivets 47 together with the anchor block 21, and a guide portion 45a configured to guide the brake cable 37 is integrally provided on the holding plate 45 so as to have a cross-sectional shape of substantially U-shape.

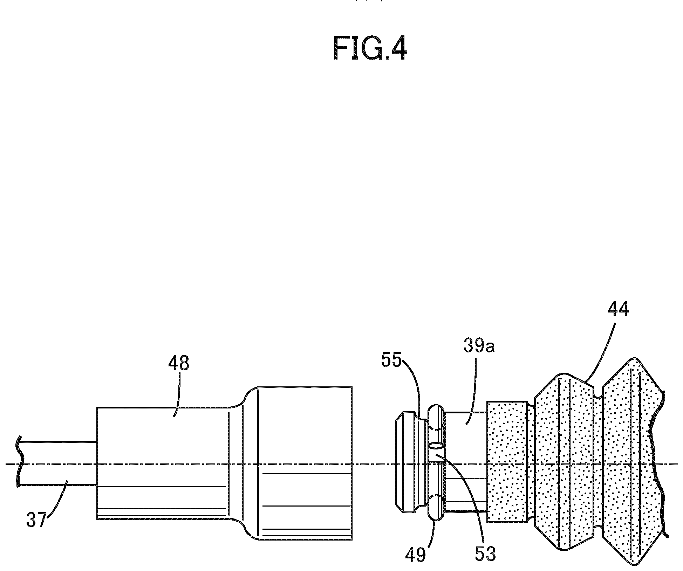

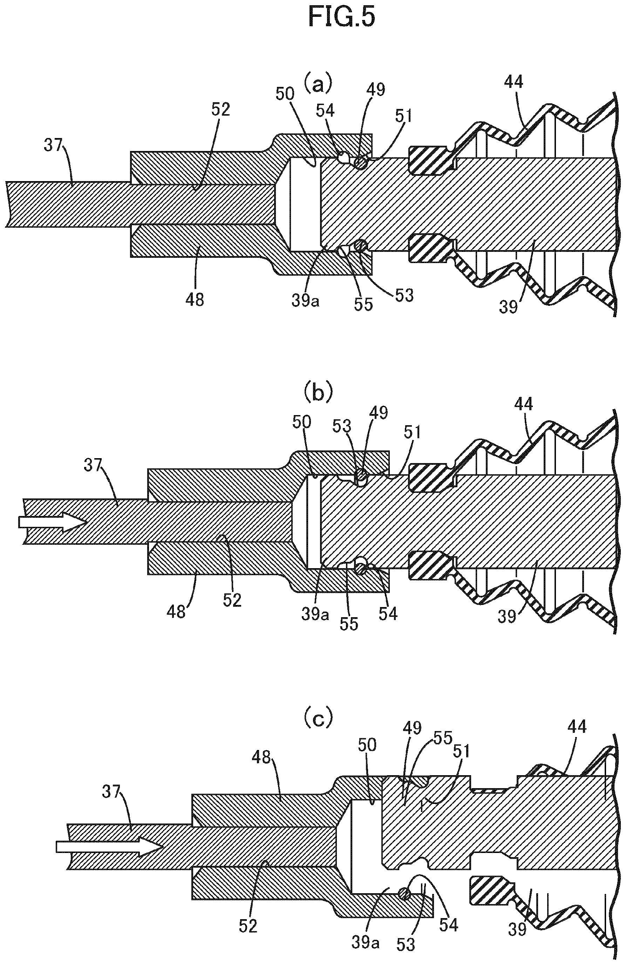

Referring to Fig. 4 and Fig. 5, a joint 48 is secured to the other end of the brake cable 37 having the engagement piece 36 at one end, for example, by caulking coupling, the screw shaft 39 of the electric actuator 38 and the joint 48 are coupled via an annular engaging member 49, which is repulsively expandable and contractible by an action of an external force. In this embodiment, the engaging member 49 is a C-ring.

One of the joint 48 and the screw shaft 39, in this embodiment, the joint 48 is provided coaxially with an insertion hole 50 having a diameter smaller than an outer diameter of the engaging member 49 when the engaging member 49 is in the natural state, and a tapered hole 51 formed to increase in diameter as it goes outward in the axial direction and coaxially continuing from one end of the insertion hole 50. The joint 48 includes a mounting hole 52 continuing coaxially with the other end of the insertion hole 50 and formed to be smaller in diameter than the insertion hole 50, and the joint 48 is secured to the other end of the brake cable 37 by caulking with the other end of the brake cable 37 inserted into the mounting hole 52.

An insertion shaft part 39a inserted from one end thereof into the insertion hole 50 is provided coaxially with the other one of the joint 48 and the screw shaft 39. In this embodiment, a portion of the screw shaft 39 protruding from the boot 44 is inserted into the insertion hole 50 as the insertion shaft part 39a.

The insertion shaft part 39a includes, on an outer periphery thereof, a first annular recess 53 capable of temporarily securing the engaging member 49 in the natural state as illustrated in Fig. 4 and allows the engaging member 49 in the temporarily secured state to be contracted in diameter until insertion into the insertion hole 50 is enabled. The insertion hole 50 includes a second annular recess 54 which rotatably engages the outer peripheral side of the engaging member 49 in an expanded state.

The insertion shaft part 39a includes, on the outer periphery thereof, a third annular recess 55 continuing from the first annular recess 53 on a front side of the first annular recess 53 along the insertion direction of the insertion shaft part 39a into the insertion hole 50 and formed to be shallower than the first annular recess 53 while being capable of receiving the inner peripheral side of the engaging member 49.

In this structure, for coupling the joint 48 and the screw shaft 39, when the insertion shaft part 39a with the engaging member 49 temporarily secured to the first annular recess 53 is inserted into the insertion hole 50 as illustrated in Fig. 4, the engaging member 49 reduced in diameter by abutment with the tapered hole 51 is inserted into the insertion hole 50 as illustrated in Fig. 5(a), and when the insertion shaft part 39a is further pushed inward, the outer peripheral side of the engaging member 49 is rotatably engaged with the second annular recess 54 as illustrated in Fig. 5(b). The engaging member 49 is engaged with both of the outer periphery of the insertion shaft part 39a and the inner periphery of the insertion hole 50 in this state, and thus the insertion shaft part 39a is allowed to rotate in the second annular recess 54, so that the brake cable 37 can be rotatably coupled to the screw shaft 39.

Moreover, when the insertion shaft part 39a is relatively moved to a side decoupled from the insertion hole 50, the third annular recess 55 on the outer periphery of the insertion shaft part 39a receives the inner peripheral side of the engaging member 49 as illustrated in Fig. 5(c), so that the insertion shaft part 39a is inhibited from being decoupled from the insertion hole 50.

Next, an action of the first embodiment will be described. The insertion hole 50 is provided on one of the joint 48 secured to the brake cable 37 and the screw shaft 39 of the electric actuator 38, the insertion shaft part 39a inserted into the insertion hole 50 is coaxially provided on the other one of the joint 48 and the screw shaft 39, and the annular engaging member 49 that can be inserted into the insertion hole 50 together with the insertion shaft part 39a is interposed between the inner periphery of the insertion hole 50 and the outer periphery of the insertion shaft part 39a such that the joint 48 and the screw shaft 39 are coupled. Therefore, by inserting the insertion shaft part 39a into the insertion hole 50 together with the annular engaging member 49, the engaging member 49 is interposed between the inner periphery of the insertion hole 50 and the outer periphery of the insertion shaft part 39a, so that the joint 48 and the screw shaft 39 are coupled, whereby a coupling work between the screw shaft 39 and the brake cable 37 is facilitated for ease of assembly.

The insertion hole 50 is formed to have a diameter smaller than an outer diameter of the engaging member 49 when the engaging member 49 repulsively expandable and contractible by an action of an external force is in a natural state, the tapered hole 51 formed to increase in diameter as it goes outward in the axial direction and coaxially continuing from one end of the insertion hole 50 is provided on one of the joint 48 and the screw shaft 39, the insertion shaft part 39a includes, on an outer periphery thereof, the first annular recess 53 capable of temporality securing the engaging member 49 in the natural state and allowing the engaging member 49 in the temporarily secured state to be contracted in diameter until insertion into the insertion hole 50 is enabled, and the insertion hole 50 includes the second annular recess 54 configured to rotatably engage the outer peripheral side of the engaging member 49 in the expanded state.

Therefore, when the insertion shaft part 39a with the engaging member 49 temporarily secured to the first annular recess 53 is inserted into the insertion hole 50, the outer peripheral side of the engaging member 49 reduced in diameter by abutment with the tapered hole 51 engages the second annular recess 54, so that the engaging member 49 is engaged with both of the outer periphery of the insertion shaft part 39a and the inner periphery of the insertion hole 50, and thus the rotation of the engaging member 49 in the second annular recess 54 is allowed. Therefore, the brake cable 37 can be rotatably coupled to the screw shaft 39 by a simple operation such as inserting the insertion shaft part 39a with the engaging member 49 temporarily secured thereto into the insertion hole 50, so that the brake cable 37 is free from twisting even when an engagement position of the engagement piece 36 at the one end of the brake cable 37 with the parking brake lever 34 is constant.

In addition, the insertion shaft part 39a includes, on the outer periphery thereof, the third annular recess 55 continuing from the first annular recess 53 on the front side of the first annular recess 53 along the insertion direction of the insertion shaft part 39a into the insertion hole 50 and formed to be shallower than the first annular recess 53 while being capable of receiving the inner peripheral side of the engaging member 49. Therefore, even when an expanding force of the engaging member 49 is lowered, such an event that the entire engaging member 49 is accommodated in the first annular recess 53 and hence is decoupled from the second annular recess 54 is prevented from occurring, so that the engaging member 49 is inhibited from coming off.

In addition, since the engaging member 49 is an inexpensive C-ring, the cost reduction is achieved.

### Second Embodiment

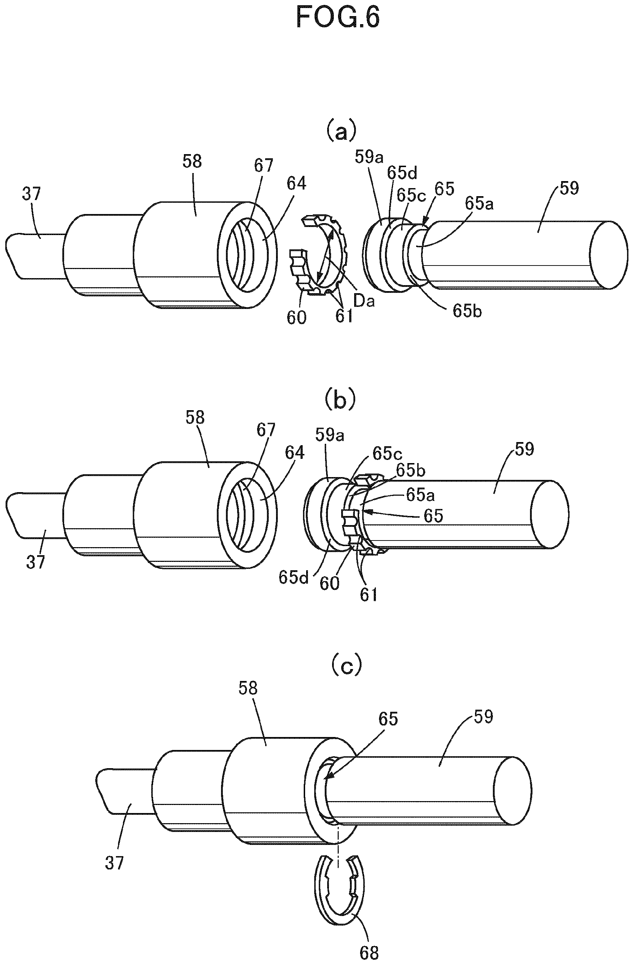

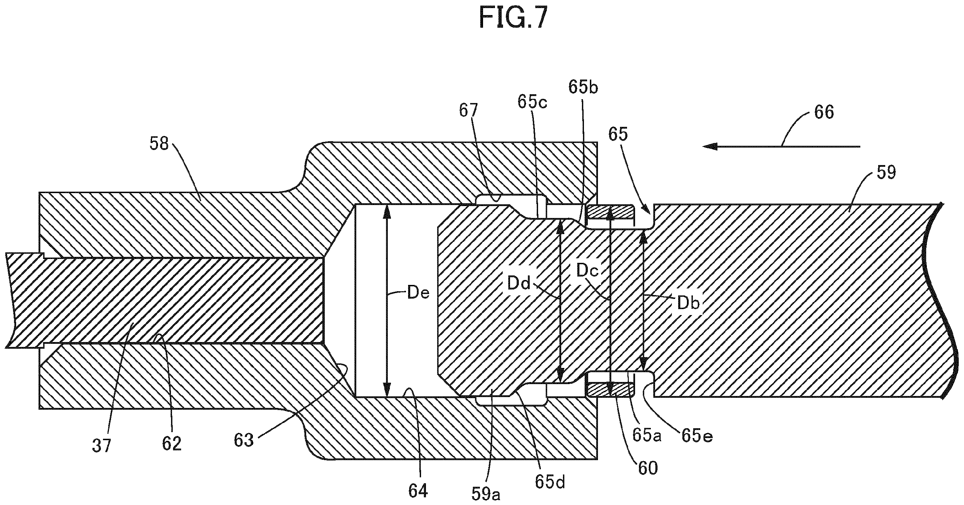

Referring now to Fig. 6 to Fig. 8, a second embodiment of the present invention will be described. Referring first to Fig. 6 and Fig. 7, a joint 58 is secured to the brake cable 37 for example, by caulking coupling, and a screw shaft 59 as a drive shaft provided on the electric actuator 38 (see the first embodiment) and the joint 58 are coupled via an annular engaging member 60, which is expandable and contractible by an action of an external force. In this embodiment, the engaging member 60 is made of metal, for example, an iron-made C-ring, and includes a plurality of grooves 61 at regular intervals in a circumferential direction on an inner periphery or an outer periphery (outer periphery in this embodiment) of the engaging member 60 for facilitating expansion and contraction.

The joint 58 is provided coaxially with a mounting hole 62 opened at one end thereof, a tapered hole 63 continuing, at a small diameter end, to the other end of the mounting hole 62, and an insertion hole 64 formed to have a diameter larger than the mounting hole 62 and continuing, at one end thereof, to a large diameter end of the tapered hole 63, and opening at the other end, and the joint 58 is secured to the brake cable 37 by caulking the joint 58 in a state in which the brake cable 37 is inserted into the mounting hole 62.

The screw shaft 59 is provided coaxially with an insertion shaft part 59a inserted into the insertion hole 64. The insertion shaft part 59a includes, on an outer periphery thereof, a fourth annular recess 65 having: a small diameter shaft section 65a, a first tapered portion 65b having a small diameter end coaxially continuing from a front end of the small diameter shaft section 65a along an insertion direction 66 of the insertion shaft part 59a into the insertion hole 64, a large diameter shaft section 65c coaxially continuing from a large diameter end of the first tapered portion 65b, and a second tapered portion 65d having a small diameter end coaxially continuing from a front end of the large diameter shaft section 65c along the insertion direction 66.

The engaging member 60 which is expandable and contractible by an action of the external force may be temporarily secured to the small diameter shaft section 65a in a state of allowing displacement in a direction orthogonal to a center axis of the insertion shaft part 59a while allowing insertion into the insertion hole 64.

In contrast, the insertion hole 64 includes, on an inner periphery thereof, an annular locking recess 67, which allows engagement of part of the outer periphery of the engaging member 60 in a state of being temporality secured to the small diameter shaft section 65a according to the displacement of the engaging member 60 in the direction orthogonal to the center axis of the insertion shaft part 59a and allows engagement of the entire outer periphery of the engaging member 60 in a state of being fitted to the large diameter shaft section 65c.

In other words, as illustrated in Fig. 6(a), an inner diameter Da of the engaging member 60 in a natural state without being temporarily secured to the small diameter shaft section 65a of the insertion shaft part 59a is set to be larger than an outer diameter Db of the small diameter shaft section 65a and smaller than an outer diameter Dd of the large diameter shaft section 65c (Db < Da < Dd), so that the engaging member 60 is expanded and contracted by exerting an external force so as to have a smaller outer diameter Dc than an inner diameter De of the insertion hole 64 (Dc < De), and is temporarily secured to the small diameter shaft section 65a as illustrated in Fig. 6(b) and Fig. 7.

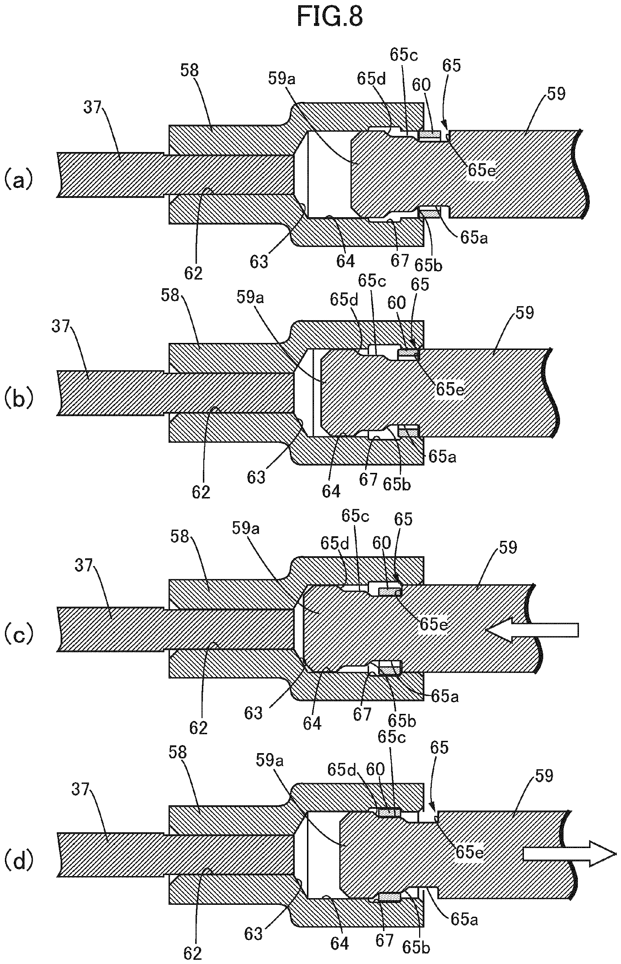

In this structure, for coupling the joint 58 and the insertion shaft part 59a of the screw shaft 59, when the insertion shaft part 59a with the engaging member 60 temporarily secured to the small diameter shaft section 65a of the fourth annular recess 65 is inserted into the insertion hole 64 in the horizontal direction as illustrated in Fig. 8(a), the engaging member 60 in a state of being temporarily secured to the small diameter shaft section 65a is also inserted into the insertion hole 64 as illustrated in Fig. 8(b). When the insertion shaft part 59a is further pushed inward and the engaging member 60 reaches a position corresponding to the locking recess 67 as illustrated in Fig. 8(c), the engaging member 60 drops under its own weight to the direction orthogonal to the center axis of the insertion shaft part 59a. Accordingly, part of the outer periphery of the engaging member 60 engages the locking recess 67, and when the insertion shaft part 59a is retracted in this state as illustrated in Fig. 8(d), the engaging member 60 regulated in retraction movement by the engagement with the locking recess 67 is expanded in diameter by the abutment with the first tapered portion 65b, fitted to the large diameter shaft section 65c, and engaged with the locking recess 67. In this state, the contraction in diameter of the engaging member 60 engaged with the locking recess 67 is inhibited, and the engaging member 60 engages with both of the outer periphery of the insertion shaft part and the inner periphery of the insertion hole 64, so that the engaging member 60 is allowed to rotate in the locking recess 67.

A regulating member 68 interposed between a rear end wall 65e and the joint 58 along the insertion direction 66 of the fourth annular recess 65 is fitted to the small diameter shaft section 65a in a state in which the engaging member 60 fitted to the large diameter shaft section 65c is engaged with the locking recess 67 as illustrated in Fig. 6(c), and the regulating member 68 is an E-type retaining ring in this embodiment.

According to the second embodiment, the brake cable 37 can be rotatably coupled to the screw shaft 59 by a simple operation such as inserting the insertion shaft part 59a with the engaging member 60 temporarily secured thereto into the insertion hole 64 and then retracting the same, so that the brake cable 37 is free from twisting even when the engagement position of the engagement piece 36 (see first embodiment) at the one end of the brake cable 37 with the parking brake lever 34 (see first embodiment) is constant.

Also, by the plurality of grooves 61 formed on the inner periphery or the outer periphery (outer periphery in the second embodiment) of the engaging member 60, expansion and contraction of the engaging member 60 is facilitated.

In addition, since the regulating member 68 interposed between the rear end wall 65e and the joint 58 along the insertion direction 66 of the fourth annular recess 65 is fitted to the small diameter shaft section 65a in a state in which the engaging member 60 fitted to the large diameter shaft section 65c is engaged with the locking recess 67, the insertion shaft part 59a is prevented from unintentionally entering the insertion hole 64 in a state in which the insertion shaft part 59a and the joint 58 are coupled via the engaging member 60, so that the engaging member 60 may be prevented from becoming a state of being fitted to the small diameter shaft section 65a. Moreover, the cost reduction may be achieved by employing an inexpensive E-type retaining ring for the regulating member 68.

### Third Embodiment

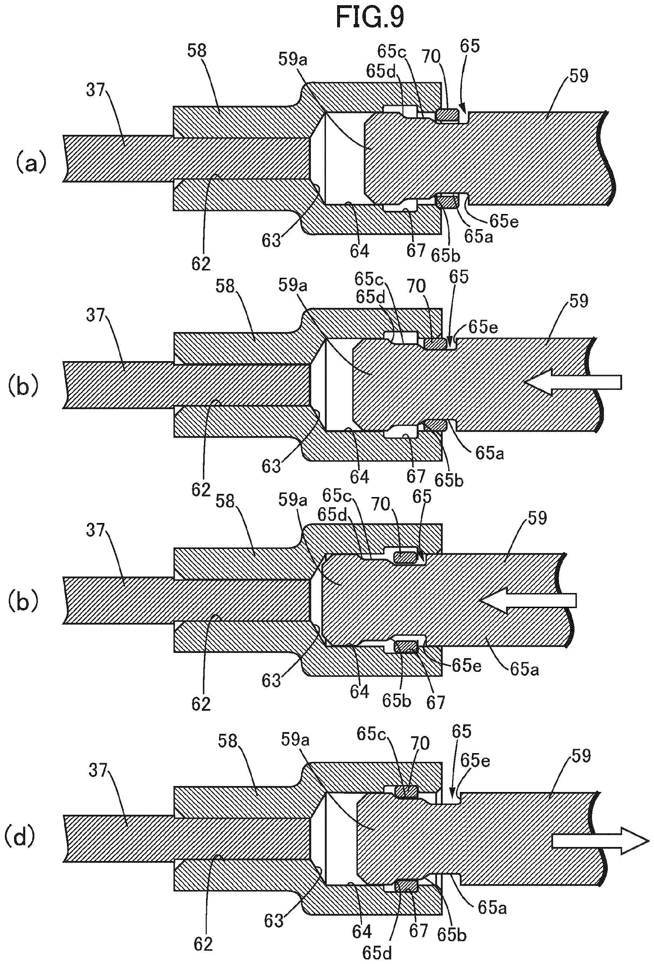

Referring now to Fig. 9, a third embodiment of the present invention will be described. Parts corresponding to the second embodiment illustrated in Fig. 6 to Fig. 8 are only illustrated with the same reference numerals, and detailed description will be omitted.

The joint 58 secured to the brake cable 37 and the insertion shaft part 59a of the screw shaft 59 are coupled via an annular engaging member 70 repulsively expandable and contractible by an action of an external force, and the engaging member 70 is a C-ring.

The engaging member 70 is temporarily secured to the small diameter shaft section 65a of the fourth annular recess 65 formed on the outer periphery of the insertion shaft part 59a in a state of having a maximum outer diameter larger than an inner diameter of the insertion hole 64 formed in the joint 58 in a natural state and capable of contracting in diameter when inserted into the insertion hole 64. In contrast, the locking recess 67 formed on an inner periphery of the insertion hole 64 allows engagement of at lest part of an outer periphery of the engaging member 70 by the engaging member 70 in a state of being temporarily secured to the small diameter shaft section 65a restoring from the state of being contracted in diameter to the natural state, and can engage the entire outer periphery of the engaging member 70 in a state of being fitted to the large diameter shaft section 65c of the fourth annular recess 65.

In this structure, for coupling the joint 58 and the insertion shaft part 59a of the screw shaft 59, when the insertion shaft part 59a with the engaging member 70 temporarily secured to the small diameter shaft section 65a of the fourth annular recess 65 is inserted into the insertion hole 64 as illustrated in Fig. 9(a), the engaging member 70 in a state of being temporarily secured to the small diameter shaft section 65a is inserted while being repulsively contracted in diameter by coming into contact with the inner periphery of the insertion hole 64 as illustrated in Fig. 9(b). When the insertion shaft part 59a is further pushed inward and the engaging member 70 reaches a position corresponding to the locking recess 67 as illustrated in Fig. 9(c), the engaging member 70 is expanded in diameter so as to repulsively restore from the state of being contracted in diameter to the natural state, whereby at least part of the engaging member 70 engages the locking recess 67. In this case, when the insertion shaft part 59a is inserted into the insertion hole 64 in the horizontal direction, the engaging member 70 drops under its own weight in a direction orthogonal to the center axis of the insertion shaft part 59a, whereby part of the outer periphery of the engaging member 70 engages the locking recess 67. When the insertion shaft part 59a is retracted in this state as illustrated in Fig. 9(d), the engaging member 70 regulated in retraction movement by the engagement with the locking recess 67 is expanded in diameter by the abutment with the first tapered portion 65b, fitted to the large diameter shaft section 65c, and engaged with the locking recess 67. In this state, the contraction in diameter of the engaging member 70 engaged with the locking recess 67 is inhibited, and the engaging member 70 engages with both of the outer periphery of the insertion shaft part 59a and the inner periphery of the insertion hole 64, so that the engaging member 70 is allowed to rotate in the locking recess 67.

The regulating member 68 (see the second embodiment), which is an E-type retaining ring in the same manner as the second embodiment described above, is fitted to the small diameter shaft section 65a in a state in which the engaging member 70 fitted to the large diameter shaft section 65c is engaged with the locking recess 67.

With the third embodiment, the same effects as the second embodiment are achieved with a simple operation such as inserting the insertion shaft part 59a on which the engaging member 70 is temporarily secured into the insertion hole 64 and then retracting the same.

Although the embodiments of the present invention have been described thus far, the present invention is not limited to the embodiments described above, and various design changes may be made without departing from the scope of the present invention as defined in the appended claims.

## Claims

1. An electric parking brake device comprising: a parking brake lever (34) capable of generating a parking brake force according to an operation; a brake cable (37) including, at one end thereof, an engagement piece (36) to be engaged with the parking brake lever (34); and an electric actuator (38) including a drive shaft (39, 59) coupled, at one end thereof, to other end of the brake cable (37) and enabling the drive shaft (39, 59) to move reciprocally in an axial direction, wherein an insertion hole (50, 64) is provided on one of a joint (48, 58) and the drive shaft (39, 59), the joint (48, 58) being secured to the other end of the brake cable (37), and an insertion shaft part (39a, 59a) to be inserted into the insertion hole (50, 64) is provided coaxially on the other of the joint (48, 58) and the drive shaft (39, 59), the electric parking brake device **characterized in that** an annular engaging member (49, 60, 70) that can be inserted into the insertion hole (50, 64) together with the insertion shaft part (39a, 59a) is interposed between an inner periphery of the insertion hole (50, 64) and an outer periphery of the insertion shaft part (39a, 59a) such that the joint (48, 58) and the drive shaft (39, 59) are coupled.

2. The electric parking brake device according to Claim 1, wherein the insertion hole (50) is formed to have a diameter smaller than an outer diameter of the engaging member (49) when the engaging member (49) repulsively expandable and contractible by an action of an external force is in a natural state, a tapered hole (51) increased in diameter as it goes outward in the axial direction and coaxially continuing from one end of the insertion hole (50) is provided on one of the joint (48) and the drive shaft (39), the insertion shaft part (39a) includes, on an outer periphery thereof, a first annular recess (53) capable of temporality securing the engaging member (49) in the natural state and allowing the engaging member (49) in a state of being temporarily secured be contracted in diameter until insertion into the insertion hole (50) is enabled, and a second annular recess (54) configured to rotatably engage an outer peripheral side of the engaging member (49) in an expanded state is formed in the insertion hole (50).

3. The electric parking brake device according to Claim 2, wherein the insertion shaft part (39a) includes, on the outer periphery thereof, a third annular recess (55) continuing from the first annular recess (53) on a front side of the first annular recess (53) along an insertion direction of the insertion shaft part (39a) into the insertion hole (50) and formed to be shallower than the first annular recess (53) while being capable of receiving an inner peripheral side of the engaging member (49).

4. The electric parking brake device according to Claim 1, wherein the insertion shaft part (59a) includes, on the outer periphery thereof, a fourth annular recess (65) having a small diameter shaft section (65a) capable of temporarily securing the engaging member (60) expandable and contractible by an action of an external force in a state of having a maximum outer diameter (Dd) smaller than an inner diameter (De) of the insertion hole (64) and enabling displacement in a direction orthogonal to a center axis of the insertion shaft part (59a), a first tapered portion (65b) including a small diameter end coaxially continuing from a front end of the small diameter shaft section (65a) along a insertion direction (66) of the insertion shaft part (59a) into the insertion hole (64), a large diameter shaft section (65c) coaxially continuing from a large diameter end of the first tapered portion (65b), and a second tapered portion (65d) having a small diameter end coaxially continuing from a front end of the large diameter shaft section (65c) along the insertion direction (66), the insertion hole (64) includes, on an inner periphery thereof, an annular locking recess (67), which allows engagement of part of the outer periphery of the engaging member (60) in a state of being temporarily secured to the small diameter shaft section (65a) according to the displacement of the engaging member (60) in a direction orthogonal to the center axis of the insertion shaft part (59a) and allows engagement of the entire outer periphery of the engaging member(60) in a state of being fitted to the large diameter shaft section (65c).

5. The electric parking brake device according to Claim 1, wherein the insertion shaft part (59a) includes, on the outer periphery thereof, a fourth annular recess (65) having a small diameter shaft section (65a) capable of temporarily securing the engaging member (70) repulsively expandable and contractible by an action of an external force in a state of having a maximum outer diameter larger than an inner diameter of the insertion hole (64) in a natural state and capable of contracting in diameter when inserted in the insertion hole (64), a first tapered portion (65b) including a small diameter end coaxially continuing from a front end of the small diameter shaft section (65a) along an insertion direction (66) of the insertion shaft part (59a) into the insertion hole (64), a large diameter shaft section (65c) coaxially continuing from a large diameter end of the first tapered portion (65b), and a second tapered portion (65d) having a small diameter end coaxially continuing from a front end of the large diameter shaft section (65c) along the insertion direction (66), and the insertion hole (64) includes, on the inner periphery thereof, an annular locking recess (67), which allows engagement of part of the outer periphery of the engaging member (70) in a state of being temporarily secured to the small diameter shaft section (65a) according to restoration of the engaging member (70) from the state of being contracted in diameter to the natural state and allows engagement of the entire outer periphery of the engaging member (70) in a state of being fitted to the large diameter shaft section (65c).

6. The electric parking brake device according to any one of Claims 1 to 5, wherein the engaging member (49, 60, 70) is a C-ring.

7. The electric parking brake device according to Claim 4 or 5, wherein a regulating member (68) interposed between a rear end wall (65e) and the joint (58) along the insertion direction (66) of the fourth annular recess (65) is fitted to the small diameter shaft section (65a) in a state in which the engaging member (60, 70) fitted to the large diameter shaft section (65d) is engaged with the locking recess (67).

8. The electric parking brake device according to Claim 4, wherein the engaging member (60) includes, on an inner periphery or an outer periphery thereof, a plurality of grooves (61) at regular intervals in a circumferential direction.

9. The electric parking brake device according to Claim 7, wherein the regulating member (68) is an E-type retaining ring.

## Patentansprüche

1. Elektrische Feststellbremsvorrichtung, umfassend: einen Feststellbremshebel (34), der in der Lage ist, eine Feststellbremskraft gemäß einer Betätigung zu erzeugen; ein Bremskabel (37), das an seinem einen Ende ein Eingriffsstück (36) einschließt, das mit dem Feststellbremshebel (34) in Eingriff gebracht werden soll; und einen elektrischen Aktuator (38), der eine Antriebswelle (39, 59) einschließt, die an ihrem einen Ende mit dem anderen Ende des Bremskabels (37) gekoppelt ist und es der Antriebswelle (39, 59) ermöglicht, sich in einer axialen Richtung hin und her zu bewegen, wobei ein Einführungsloch (50, 64) an einem von einem Gelenk (48, 58) und der Antriebswelle (39, 59) bereitgestellt ist, wobei das Gelenk (48, 58) am anderen Ende des Bremskabels (37) gesichert ist und ein in das Einführungsloch (50, 64) einzuführendes Einführungsschaftteil (39a, 59a) koaxial am anderen Ende des Gelenks (48, 58) und der Antriebswelle (39, 59) bereitgestellt ist, wobei die elektrische Feststellbremsvorrichtung **dadurch gekennzeichnet ist, dass** ein ringförmiges Eingriffselement (49, 60, 70), das zusammen mit dem Einführungsschaftteil (39a, 59a) in das Einführungsloch (50, 64) eingeführt werden kann, zwischen einem Innenumfang des Einführungslochs (50, 64) und einem Außenumfang des Einführungsschaftteils (39a, 59a) angeordnet ist, so dass das Gelenk (48, 58) und die Antriebswelle (39, 59) gekoppelt sind.

2. Elektrische Feststellbremsvorrichtung nach Anspruch 1, wobei das Einführungsloch (50) so ausgebildet ist, dass es einen Durchmesser aufweist, der kleiner ist als ein Außendurchmesser des Eingriffselements (49), wenn sich das Eingriffselement (49), das durch die Einwirkung einer äußeren Kraft repulsiv expandierbar und kontrahierbar ist, in einem natürlichen Zustand befindet, wobei ein verjüngtes Loch (51), dessen Durchmesser sich in der axialen Richtung nach außen vergrößert und die sich koaxial von einem Ende des Einführungslochs (50) fortsetzt, an einem von dem Gelenk (48) und der Antriebswelle (39) bereitgestellt ist, wobei der Einführungsschaftteil (39a) an seinem Außenumfang eine erste ringförmige Aussparung (53) einschließt, die in der Lage ist, das Eingriffselement (49) im natürlichen Zustand vorübergehend zu sichern und es dem Eingriffselement (49) in einem Zustand vorübergehender Sicherung zu ermöglichen, im Durchmesser zu kontrahieren, bis die Einführung in das Einführungsloch (50) ermöglicht wird, und eine zweite ringförmige Aussparung (54), die so konfiguriert ist, dass sie drehbar in eine äußere Umfangsseite des Eingriffselements (49) in einem expandierten Zustand eingreift, in dem Einführungsloch (50) ausgebildet ist.

3. Elektrische Feststellbremsvorrichtung nach Anspruch 2, wobei der Einführungsschaftteil (39a) an seinem Außenumfang eine dritte ringförmige Aussparung (55) einschließt, die sich von der ersten ringförmigen Aussparung (53) an einer Vorderseite der ersten ringförmigen Aussparung (53) entlang einer Einführungsrichtung des Einführungsschaftteils (39a) in das Einführungsloch (50) fortsetzt und flacher als die erste ringförmige Aussparung (53) ausgebildet ist, während sie in der Lage ist, eine innere Umfangsseite des Eingriffselements (49) aufzunehmen.

4. Elektrische Feststellbremsvorrichtung nach Anspruch 1, wobei der Einführungsschaftteil (59a) an seinem Außenumfang eine vierte ringförmige Aussparung (65) einschließt, die einen Schaftabschnitt (65a) mit kleinem Durchmesser aufweist, der in der Lage ist, das Eingriffselement (60) vorübergehend zu sichern, das durch die Einwirkung einer äußeren Kraft in einem Zustand expandierbar und kontrahierbar ist, in dem es einen maximalen Außendurchmesser (Dd) aufweist, der kleiner als ein Innendurchmesser (De) des Einführungslochs (64) ist, und der eine Verschiebung in einer Richtung orthogonal zu einer Mittelachse des Einführungsschaftteils (59a) ermöglicht, einen ersten verjüngten Abschnitt (65b), der ein Ende mit kleinem Durchmesser einschließt, das sich koaxial von einem vorderen Ende des Schaftabschnitts (65a) mit kleinem Durchmesser entlang einer Einführungsrichtung (66) des Einführungsschaftteils (59a) in das Einführungsloch (64) fortsetzt, einen Schaftabschnitt (65c) mit großem Durchmesser, der sich koaxial von einem Ende mit großem Durchmesser des ersten verjüngten Abschnitts (65b) fortsetzt, und einen zweiten verjüngten Abschnitt (65d) mit einem Ende mit kleinem Durchmesser, der sich koaxial von einem vorderen Ende des Schaftabschnitts (65c) mit großem Durchmesser entlang der Einführungsrichtung (66) fortsetzt, wobei das Einführungsloch (64) an seiner inneren Umfangsrichtung eine ringförmige Verriegelungsaussparung (67) einschließt, die den Eingriff eines Teils des Außenumfangs des Eingriffselements (60) in einem Zustand ermöglicht, in dem es vorübergehend an dem Einführungsschaftteil (65a) mit kleinem Durchmesser gesichert ist, gemäß der Verschiebung des Eingriffselements (60) in einer Richtung orthogonal zur Mittelachse des Einführungsschaftteils (59a), und den Eingriff des gesamten Außenumfangs des Eingriffselements (60) in einem Zustand ermöglicht, in dem es an dem Schaftabschnitt (65c) mit großem Durchmesser angebracht ist.

5. Elektrische Feststellbremsvorrichtung nach Anspruch 1, wobei der Einführungsschaftteil (59a) an seinem Außenumfang eine vierte ringförmige Aussparung (65) einschließt, die einen Schaftabschnitt (65a) mit kleinem Durchmesser aufweist, der in der Lage ist, das Eingriffselement (70) vorübergehend zu sichern, das durch die Einwirkung einer äußeren Kraft in einem Zustand, in dem sein maximaler Außendurchmesser größer ist als ein Innendurchmesser des Einführungslochs (64) in einem natürlichen Zustand und in der Lage ist, im Durchmesser zu kontrahieren, wenn es in das Einführungsloch (64) eingeführt ist, repulsiv expandierbar und kontrahierbar ist, einen ersten verjüngten Abschnitt (65b), der ein Ende mit kleinem Durchmesser einschließt, das sich koaxial von einem vorderen Ende des Schaftabschnitts (65a) mit kleinem Durchmesser entlang einer Einführungsrichtung (66) des Einführungsschaftteils (59a) in das Einführungsloch (64) fortsetzt, einen Schaftabschnitt (65c) mit großem Durchmesser, der sich koaxial von einem Ende mit großem Durchmesser des ersten verjüngten Abschnitts (65b) fortsetzt, und einen zweiten verjüngten Abschnitt (65d), der ein Ende mit kleinem Durchmesser aufweist, der sich koaxial von einem vorderen Ende des Schaftabschnitts (65c) mit großem Durchmesser entlang der Einführungsrichtung (66) fortsetzt, und wobei das Einführungsloch (64) an seiner inneren Umfangsrichtung eine ringförmige Verriegelungsaussparung (67) einschließt, die den Eingriff eines Teils des Außenumfangs des Eingriffselements (70) in einem Zustand ermöglicht, in dem es vorübergehend an dem Schaftabschnitt (65a) mit kleinem Durchmesser gesichert ist, gemäß der Rückführung des Eingriffselements (70) aus dem Zustand, in dem es im Durchmesser kontrahiert ist, in den natürlichen Zustand, und die den Eingriff des gesamten Außenumfangs des Eingriffselements (70) in einem Zustand ermöglicht, in dem es an dem Schaftabschnitts (65c) mit großem Durchmesser angebracht ist.

6. Elektrische Feststellbremsvorrichtung nach einem der Ansprüche 1 bis 5, wobei das Eingriffselement (49, 60, 70) ein C-Ring ist.

7. Elektrische Feststellbremsvorrichtung nach Anspruch 4 oder 5, wobei ein Regulierungselement (68), das zwischen einer hinteren Stirnwand (65e) und dem Gelenk (58) entlang der Einführungsrichtung (66) der vierten ringförmigen Aussparung (65) angeordnet ist, an dem Schaftabschnitt (65a) mit kleinem Durchmesser in einem Zustand angebracht ist, in dem das an dem Schaftabschnitt (65d) mit großem Durchmesser angebrachte Eingriffselement (60, 70) mit der Verriegelungsaussparung (67) in Eingriff ist.

8. Elektrische Feststellbremsvorrichtung nach Anspruch 4, wobei das Eingriffselement (60) an seinem Innenumfang oder Außenumfang eine Vielzahl von Rillen (61) in regelmäßigen Abständen in Umfangsrichtung einschließt.

9. Elektrische Feststellbremsvorrichtung nach Anspruch 7, wobei das Regulierungselement (68) ein E-Typ-Sicherungsring ist.

## Revendications

1. Dispositif de frein de stationnement électrique comprenant : un levier de frein de stationnement (34) capable de générer une force de frein de stationnement en fonction d'une opération ; un câble de frein (37) incluant, à une extrémité de celui-ci, une pièce de mise en prise (36) destinée à venir en prise avec le levier de frein de stationnement (34) ; et un actionneur électrique (38) incluant un arbre d'entraînement (39, 59) couplé, à une extrémité de celui-ci, à l'autre extrémité du câble de frein (37) et permettant à l'arbre d'entraînement (39, 59) de se déplacer réciproquement dans une direction axiale, dans lequel un trou d'insertion (50, 64) est ménagé sur l'un d'un joint (48, 58) et de l'arbre d'entraînement (39, 59), le joint (48, 58) étant fixé à l'autre extrémité du câble de frein (37), et une partie d'arbre d'insertion (39a, 59a) à insérer dans le trou d'insertion (50, 64) est disposée coaxialement sur l'autre du joint (48, 58) et de l'arbre d'entraînement (39, 59), le dispositif de frein de stationnement électrique étant **caractérisé en ce qu'**un élément de mise en prise annulaire (49, 60, 70) qui peut être inséré dans le trou d'insertion (50, 64) conjointement avec la partie d'arbre d'insertion (39a, 59a) est interposé entre une périphérie interne du trou d'insertion (50, 64) et une périphérie externe de la partie d'arbre d'insertion (39a, 59a) de telle sorte que le joint (48, 58) et l'arbre d'entraînement (39, 59) soient couplés.

2. Dispositif de frein de stationnement électrique selon la revendication 1, dans lequel le trou d'insertion (50) est formé pour présenter un diamètre inférieur à un diamètre extérieur de l'élément de mise en prise (49) lorsque l'élément de mise en prise (49) pouvant s'étendre et se contracter par répulsion par une action d'une force externe est dans un état naturel, un trou conique (51) dont le diamètre augmente à mesure qu'il s'étend vers l'extérieur dans la direction axiale et se prolongeant coaxialement à partir d'une extrémité du trou d'insertion (50) est ménagé sur l'un du joint (48) et de l'arbre d'entraînement (39), la partie d'arbre d'insertion (39a) inclut, sur une périphérie externe de celle-ci, un premier évidement annulaire (53) capable de fixer temporairement l'élément de mise en prise (49) dans l'état naturel et permettant à l'élément de mise en prise (49) dans un état fixé temporairement de subir une contraction de diamètre jusqu'à ce que l'insertion dans le trou d'insertion (50) soit permise, et un deuxième évidement annulaire (54) configuré pour venir en prise de manière rotative avec un côté périphérique externe de l'élément de mise en prise (49) dans un état étendu est formé dans le trou d'insertion (50).

3. Dispositif de frein de stationnement électrique selon la revendication 2, dans lequel la partie d'arbre d'insertion (39a) inclut, sur la périphérie externe de celle-ci, un troisième évidement annulaire (55) se prolongeant à partir du premier évidement annulaire (53) sur un côté avant du premier évidement annulaire (53) le long d'une direction d'insertion de la partie d'arbre d'insertion (39a) dans le trou d'insertion (50) et formé pour être moins profond que le premier évidement annulaire (53) tout en étant capable de recevoir un côté périphérique interne de l'élément de mise en prise (49).

4. Dispositif de frein de stationnement électrique selon la revendication 1, dans lequel la partie d'arbre d'insertion (59a) inclut, sur la périphérie externe de celle-ci, un quatrième évidement annulaire (65) présentant une section d'arbre de petit diamètre (65a) capable de fixer temporairement l'élément de mise en prise (60) pouvant s'étendre et se contracter par une action d'une force externe dans un état présentant un diamètre extérieur maximal (Dd) inférieur à un diamètre intérieur (De) du trou d'insertion (64) et permettant un déplacement dans une direction perpendiculaire à un axe central de la partie d'arbre d'insertion (59a), une première partie conique (65b) incluant une extrémité de petit diamètre se prolongeant coaxialement depuis une extrémité avant de la section d'arbre de petit diamètre (65a) le long d'une direction d'insertion (66) de la partie d'arbre d'insertion (59a) dans le trou d'insertion (64), une section d'arbre de grand diamètre (65c) se prolongeant coaxialement depuis une extrémité de grand diamètre de la première partie conique (65b), et une seconde partie conique (65d) présentant une extrémité de petit diamètre se prolongeant coaxialement depuis une extrémité avant de la section d'arbre de grand diamètre (65c) le long de la direction d'insertion (66), le trou d'insertion (64) inclut, sur une périphérie interne de celui-ci, un évidement de verrouillage annulaire (67), qui permet la mise en prise d'une partie de la périphérie externe de l'élément de mise en prise (60) dans un état fixé temporairement à la section d'arbre de petit diamètre (65a) en fonction du déplacement de l'élément de mise en prise (60) dans une direction perpendiculaire à l'axe central de la partie d'arbre d'insertion (59a) et permet la mise en prise de toute la périphérie externe de l'élément de mise en prise (60) dans un état ajusté sur la section d'arbre de grand diamètre (65c).

5. Dispositif de frein de stationnement électrique selon la revendication 1, dans lequel la partie d'arbre d'insertion (59a) inclut, sur la périphérie externe de celle-ci, un quatrième évidement annulaire (65) présentant une section d'arbre de petit diamètre (65a) capable de fixer temporairement l'élément de mise en prise (70) pouvant s'étendre et se contracter par répulsion par une action d'une force externe dans un état présentant un diamètre extérieur maximal supérieur à un diamètre intérieur du trou d'insertion (64) dans un état naturel et capable de se contracter en diamètre lorsqu'il est inséré dans le trou d'insertion (64), une première partie conique (65b) incluant une extrémité de petit diamètre se prolongeant coaxialement depuis une extrémité avant de la section d'arbre de petit diamètre (65a) le long d'une direction d'insertion (66) de la partie d'arbre d'insertion (59a) dans le trou d'insertion (64), une section d'arbre de grand diamètre (65c) se prolongeant coaxialement depuis une extrémité de grand diamètre de la première partie conique (65b), et une seconde partie conique (65d) présentant une extrémité de petit diamètre se prolongeant coaxialement depuis un extrémité avant de la section d'arbre de grand diamètre (65c) le long de la direction d'insertion (66), et le trou d'insertion (64) inclut, sur la périphérie interne de celui-ci, un évidement de verrouillage annulaire (67), qui permet la mise en prise d'une partie de la périphérie externe de l'élément de mise en prise (70) dans un état fixé temporairement à la section d'arbre de petit diamètre (65a) en fonction du rétablissement de l'élément de mise en prise (70) de l'état contracté en diamètre à l'état naturel et permet la mise en prise de toute la périphérie externe de l'élément de mise en prise (70) dans un état ajusté sur la section d'arbre de grand diamètre (65c).

6. Dispositif de frein de stationnement électrique selon l'une quelconque des revendications 1 à 5, dans lequel l'élément de mise en prise (49, 60, 70) est un anneau en C.

7. Dispositif de frein de stationnement électrique selon la revendication 4 ou 5, dans lequel un élément de régulation (68) interposé entre une paroi d'extrémité arrière (65e) et le joint (58) le long de la direction d'insertion (66) du quatrième évidement annulaire (65) est ajusté sur la section d'arbre de petit diamètre (65a) dans un état dans lequel l'élément de mise en prise (60, 70) ajusté sur la section d'arbre de grand diamètre (65d) est en prise avec l'évidement de verrouillage (67).

8. Dispositif de frein de stationnement électrique selon la revendication 4, dans lequel l'élément de mise en prise (60) inclut, sur une périphérie interne ou une périphérie externe de celui-ci, une pluralité de rainures (61) à intervalles réguliers dans une direction circonférentielle.

9. Dispositif de frein de stationnement électrique selon la revendication 7, dans lequel l'élément de régulation (68) est un anneau de retenue de type E.
